# EUROPEAN PATENT APPLICATION

(11) **EP 3 474 128 A1**
(43) Date of publication of application: **24.04.2019**
(21) Application number: 18201101.5
(22) Date of filing: 18.10.2018
(51) Int. Cl.: G06F 3/0488, G06F 3/044

(54) **WIPING DEVICE, TOUCH SYSTEM AND METHOD FOR ERASING HANDWRITING OF TOUCH SYSTEM**

(30) Priority: 19.10.2017 CN 201710978794
(71) Applicant: Coretronic Corporation, Hsin-Chu 300 (TW)
(72) Inventor: WU, Chia-Cheng, Hsin-Chu 300 (TW); KUO, Pen-Ning, Hsin-Chu 300 (TW)
(74) Representative: Ter Meer Steinmeister & Partner

(57) **Abstract**

The disclosure provides a wiping device configured for a touch surface having capacitive touch function. The wiping device includes a shell, a plurality of induction elements and an erasing body. The shell includes a conductive material. The induction elements are respectively electrically connected to the shell. The induction elements are separated from each other. The erasing body is disposed on the induction element. At least a portion of the erasing body includes an insulating material. When the wiping device is in contact with the touch surface, at least two of the induction elements enable the touch surface to generate an erasing function command. The disclosure can simultaneously erase handwriting of writing device on the touch surface and delete writing track information corresponding to handwriting of writing device in the electronic device.

## Description

This application claims the priority of China application serial no. 201710978794.2, filed on October 19, 2017.

### BACKGROUND OF THE DISCLOSURE

### Field of the Disclosure

The disclosure is related to a wiping device, and particularly to a wiping device configured for a touch surface having a capacitive touch function.

### Description of Related Art

Panels having touch function are increasingly common in the market. Many products such as cell phones, tablet PCs, panels for vehicle, electronic white boards and so on are integrated with the technology of touch panel so that the writing track of a touching object (e.g., finger or stylus) on the panel can be converted into a writing track information stored in hardware.

When the electronic whiteboard is used, sometimes a writing device is used to draw handwriting of the writing device on the electronic whiteboard, and a touching object is used to generate the writing track information in an electronic device. However, when a general erasing body is used to erase the handwriting of the writing device on the surface of electronic whiteboard, the writing track information in the electronic device is not removed; additional step is required to remove the writing track information in the electronic device, which causes inconvenience for user. In order to solve the above-mentioned problem, a method that can simultaneously remove handwriting of writing device and writing track information is needed.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY OF THE DISCLOSURE

The disclosure provides a wiping device which enables a touch surface to generate an erasing function command.

The disclosure provides a touch system, in which a wiping device enables a touch surface to generate an erasing function command.

The disclosure provides a handwriting erasing method of a touch system, which can simultaneously erase the handwriting of a writing device on a touch surface and delete writing track information corresponding to the handwriting of the writing device in the electronic device.

In the disclosure, a wiping device is configured for a touch surface having a capacitive touch function. The wiping device includes a shell, a plurality of induction elements and an erasing body. The shell includes a conductive material. The induction elements are respectively electrically connected to the shell. The induction elements are separated from each other. The erasing body is disposed on the induction elements. At least a portion of the erasing body includes an insulating material. When the wiping device is in contact with the touch surface, at least two of the induction elements enable the touch surface to generate an erasing function command.

Preferably, at least one of the plurality of induction elements has a different shape relative to the other induction elements.

Preferably, at least one of the plurality of induction elements has a different conductive coefficient relative to the other plurality of induction elements.

Preferably, a first vertical distance is defined between at least one of the plurality of induction elements and the erasing body, a second vertical distance is defined between the other plurality of induction elements and the erasing body, the first vertical distance is different from the second vertical distance.

Preferably, the wiping device further comprises an electric isolator disposed between the shell and the erasing body.

Preferably, the plurality of induction elements are disposed between the electric isolator and the erasing body, the electric isolator provides an elastic force to the plurality of induction elements to enable the plurality of induction elements to be closely attached to the erasing body.

Preferably, at least one of the electric isolator, the plurality of induction elements, the shell and the erasing body comprises a magnetic material.

Preferably, the wiping device further comprises a plurality of connecting elements respectively electrically connecting the plurality of induction elements to the shell.

Preferably, the wiping device further comprises a conductive supporter and a connecting element, the conductive supporter is configured to fix the plurality of induction elements on the erasing body, the connecting element is electrically connected to the conductive supporter and the shell.

Preferably, the wiping device further comprises a plurality of elastic elements respectively disposed on the plurality of connecting elements.

In the disclosure, a touch system includes a touch surface and a wiping device. The touch surface has a capacitive touch function. The wiping device includes a shell, a plurality of induction elements and an erasing body. The induction elements are respectively electrically connected to the shell, and the induction elements are separated from each other. The erasing body is disposed on the induction elements, wherein at least a portion of the erasing body includes an insulating material. When the wiping device is in contact with the touch surface, the induction elements enable the touch surface to generate an erasing function command.

Preferably, the touch system further comprises an electronic device, configured to receive the erasing function command from the touch surface.

Preferably, when the wiping device is in contact with the touch surface, the erasing body erases a handwriting of a writing device on the touch surface, the electronic device simultaneously deletes a writing track information corresponding to the handwriting of the writing device according to the erasing function command.

Preferably, at least one of the plurality of induction elements has a different shape relative to the other plurality of induction elements.

Preferably, at least one of the plurality of induction elements has a different conductive coefficient relative to the other plurality of induction elements.

Preferably, a first vertical distance is defined between at least one of the plurality of induction elements and the erasing body, a second vertical distance is defined between the other plurality of induction elements and the erasing body, the first vertical distance is different from the second vertical distance.

Preferably, the touch system further comprises an electric isolator disposed between the shell and the erasing body.

Preferably, the plurality of induction elements are disposed between the electric isolator and the erasing body, the electric isolator provides an elastic force to the plurality of induction elements to enable the plurality of induction elements to be closely attached to the erasing body.

Preferably, at least one of the electric isolator, the plurality of induction elements, the shell, the erasing body comprises a magnetic material.

Preferably, the touch system further comprises a plurality of connecting elements respectively electrically connecting the plurality of induction elements to the shell.

Preferably, the touch system further comprises a conductive supporter and a connecting element, the conductive supporter is configured to fix the plurality of induction elements on the erasing body, the connecting element is electrically connected to the conductive supporter and the shell.

Preferably, the touch system further comprises a plurality of elastic elements respectively disposed on the plurality of connecting elements.

In the disclosure, a method for erasing handwriting of a touch system includes providing the touch system; erasing handwriting of writing device on the touch surface using an erasing body of the wiping device; identifying at least two of the induction elements of the wiping device using the touch system and generating an erasing function command; outputting the erasing function command to an electronic device electrically connected to the touch surface; and simultaneously deleting writing track information corresponding to handwriting of writing device in the electronic device according to the erasing function command.

At least one of the purposes of the disclosure is to simultaneously erase the handwriting of writing device on the touch surface and delete writing track information corresponding to handwriting of writing device in the electronic device.

At least one of the purposes of the disclosure is to adjust the position, number, geometric shape and/or conductive coefficient of the induction elements so that the capacitive value of the touch surface is changed correspondingly, and an erasing shift amount, an erasing shift angle, an erasing rotating angle and/or erasing pressing stress are calculated using trigonometric function and calculus function.

At least one of the purposes of the disclosure is to use an electric isolator to maintain a capacitive angle of the touch surface and the touch device.

In order to make the aforementioned features and advantages of the disclosure more comprehensible, embodiments accompanying figures are described in detail below.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1A and FIG. 1B are three-dimensional schematic views illustrating a wiping device in different viewing angles according to an embodiment of the disclosure.
FIG. 1C is a three-dimensional explosive view illustrating the wiping device in FIG. 1A and FIG. 1B.
FIG. 2A is a three-dimensional schematic view illustrating a wiping device according to an embodiment of the disclosure.
FIG. 2B is a three-dimensional explosive view illustrating a portion of the wiping device in FIG. 2A.
FIG. 2C is a three-dimensional explosive view illustrating the wiping device in FIG. 2A.
FIG. 3A is a three-dimensional schematic view illustrating a wiping device according to an embodiment of the disclosure.
FIG. 3B is a top view illustrating the wiping device in FIG. 3A.
FIG. 3C is a side explosive view illustrating the wiping device in FIG. 3A.
FIG. 4A is a three-dimensional schematic view illustrating a wiping device according to an embodiment of the disclosure.
FIG. 4B is a three-dimensional explosive view illustrating a portion of the wiping device in FIG. 4A.
FIG. 4C is a three-dimensional explosive view illustrating the wiping device in FIG. 4A.
FIG. 5 is a schematic view illustrating a touch system according to an embodiment of the disclosure.

### DESCRIPTION OF EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

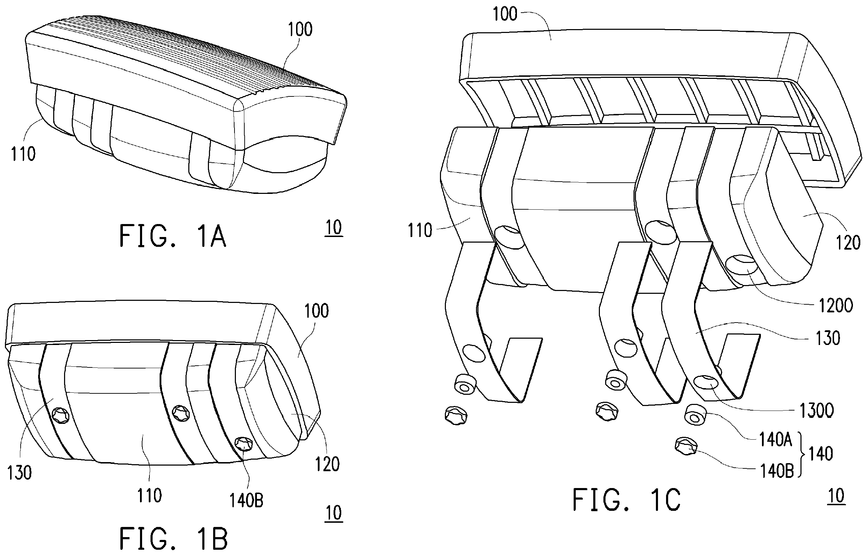

FIG. 1A and FIG. 1B are three-dimensional schematic views illustrating a wiping device in different viewing angles according to an embodiment of the disclosure. FIG. 1C is a three-dimensional explosive view illustrating the wiping device in FIG. 1A and FIG. 1B.

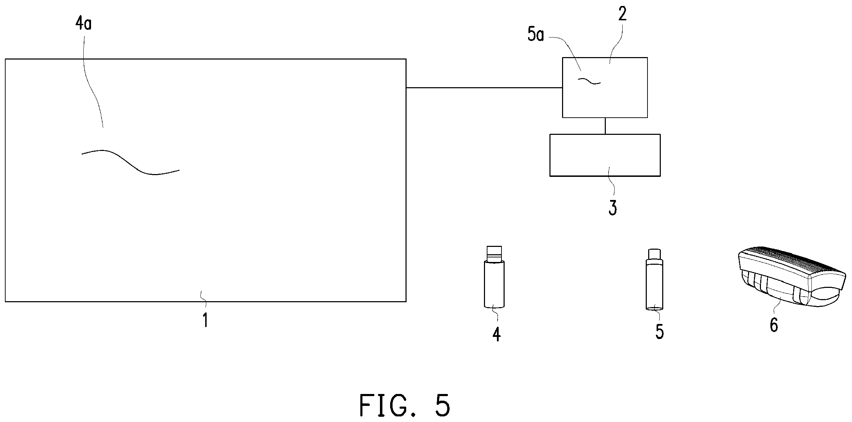

Referring to FIG. 1A, FIG. 1B and FIG. 1C, a wiping device 10 is configured for a touch surface having a capacitive touch function. The touch surface, for example, uses a projected capacitive touch (PCT) technology. The wiping device 10 includes a shell 100, a plurality of induction elements 140 and an erasing body 110. The wiping device 10 is, for example, configured for a touch surface 1 as shown in FIG. 5 ,and the wiping device 10 has an erasing surface adapts to contact with the touch surface 1 of Fig. 5; detailed descriptions are incorporated below.

The shell 100 includes a conductive material. The geometric shape of the shell 100 may be adjusted depending on the need, for example, in a square shape, a rectangular shape, a round shape, other geometric shape, a combination of a plurality of geometric shapes or a shape that is easy for user to hold.

In an embodiment, the shell 100 includes a magnetic material or a non-magnetic material. When the shell 100 and the touch surface both have magnetism, the erasing surface of the wiping device 10 can be more parallel with the touch surface by using permanent magnetism principle to avoid erroneous sensing on the touch surface due to uneven force that is applied when the user performs erasing action.

Each of the induction elements 140 includes a conductive material and the induction elements 140 are respectively electrically connected to the shell 100. In the embodiment, the wiping device 10 includes at least one connecting element 130, and the induction elements 140 are electrically connected to the shell 100 using the at least one connecting element 130. FIG. 1B and FIG. 1C illustrate that the number of the at least one connecting element 130 is the same as the number of the induction elements 140. That is, each of the induction elements 140 is electrically connected to the shell 100 via corresponding connecting element 130, which should not be construed as a limitation to the disclosure. Each of the induction element 140 includes a first portion 140A and a second portion 140B. The second portion 140B fixes the first portion 140A in an opening 1300 of the connecting element 130, which should not be construed as a limitation to the disclosure. In other embodiment, each induction element 140 may be fixed on the corresponding connecting element 130 via other means.

The induction elements 140 are separated from each other, and a distance between each of the induction elements 140 is, for example, larger than 1.5cm. When the wiping device 10 is in contact with the touch surface, the touch surface senses at least two of the induction elements 140 so that the touch surface generates an erasing function command. In some embodiments, it may be that three or more of the induction elements 140 enable the touch surface to generate the erasing function command. The arrangement position, number, geometric shape and conductive coefficient of the induction elements 140 may be adjusted depending on the need of change of capacitive value. Each of the induction elements 140, for example, includes a capacitive sensing sheet; however, the disclosure does not limit that the induction elements 140 are sheet-like, and the induction elements 140 may have any geometric shape.

In some embodiments, at least one of the induction elements 140 has a different shape relative to the other induction elements 140, in particular the geometric shape of the portion of the induction element 140 in the proximity of the erasing surface of the wiping device 10. Since the induction element 140 with different shape can cause a different touch signal (e.g., touch signal with different strength) on the touch surface, the relative positions of the induction elements 140 with different geometric shape can be determined based on the change of the capacitive value, and then the erasing shift amount, erasing shift angle, erasing rotating angle and/or erasing pressing stress of the wiping device 10 can be calculated using the trigonometric function and calculus function.

In some embodiments, at least one of the induction elements 140 has a different conductive coefficient relative to the other induction elements 140. Since the induction element 140 with different conductive coefficient can cause a different touch signal (e.g., touch signal with different strength) on the touch surface, the relative positions of the induction elements 140 with the different conductive coefficient can be determined based on the change of the capacitive value, and then the erasing shift amount, erasing shift angle, erasing rotating angle and/or erasing pressing stress of the wiping device 10 can be calculated using the trigonometric function and calculus function.

In an embodiment, the induction element 140 includes a magnetic material or a non-magnetic material. When the induction element 140 and the touch surface both have magnetism, the erasing surface of the wiping device 10 can be more parallel with the touch surface by using magnetic force to avoid erroneous sensing on the touch surface due to uneven force that is applied when the user performs erasing action.

The erasing body 110 is disposed on the induction elements 140. The erasing body 110 is configured to erase the handwriting of writing device on the touch surface, for example, ink handwriting or the handwriting with other pigment. At least a portion of the erasing body 110 includes an insulating material. In the embodiment, the whole erasing body 100 is formed of the insulating material, which should not be construed as a limitation to the disclosure. In some embodiments, the portion of the erasing body 110 corresponding to the induction elements 140 may include a conductive material, and the portion that does not correspond to the induction elements 140 is formed of the insulating material. The conductive material on the erasing body is, for example, separated from each other so that the wiping device 10 can generate signals (or separated signals) of different positions via the induction elements 140 and the portion of the erasing body 110 corresponding to the induction elements 140 when being brought into contact with the touch surface to activate the erasing function command. In some embodiments, the wiping device 10 includes a replaceable type erasing body 110 so that the erasing body 110 is easy to be cleaned, replaced and repaired.

In an embodiment, the erasing body 110 includes a magnetic material or a non-magnetic material. When the erasing body 110 and the touch surface both have magnetism, the erasing surface of the wiping device 10 can be more parallel with the touch surface by using permanent magnetism principle to avoid erroneous sensing on the touch surface due to uneven force that is applied when the user performs erasing action.

The wiping device 10 may selectively include an electric isolator 120. The electric isolator 120 is disposed between the shell 100 and the erasing body 110. In the embodiment, the electric isolator 120 has a plurality of openings 1200; a portion of the connecting element 130 is filled into the openings 1200 and fixed in the opening 1200, which should not be construed as a limitation to the disclosure. In other embodiment, the connecting element 130 may be fixed on the electric isolator 120 via other means. In the embodiment, the electric isolator 120 is disposed between the induction elements 140 and the shell 100 so that the induction elements 140 can only be electrically connected to the shell 100 via the connecting element 130, and the erasing body 110 can cover the induction elements 140 and the electric isolator 120. The induction elements 140 are sensed by the touch surface to generate the touch signal independently from the erasing body 110. Specifically, when the wiping device 10 is in contact with the touch surface, at least two of the induction elements 140 enable the touch surface to generate the touch signal to activate the erasing function command, and the wiping device 10 can simultaneously erase the handwriting (physical ink handwriting) of writing device on the touch surface and delete writing track information corresponding to the handwriting of writing device according to the erasing function command.

In some embodiments, the electric isolator 120 includes a buffer isolating material, and the electric isolator 120, for example, has the characteristic of being soft. The electric isolator 120 may be changed in its shape and body according to the user's gesture to maintain the angle between the wiping device 10 and the touch surface. In some embodiments, when the wiping device 10 and the touch surface are more fitted to each other, the induction elements 140 in the wiping device 10 can be more parallel with the touch surface, and the touch surface can better detect the actual positions of the induction elements 140. In some embodiments, the thickness of the electric isolator 120 is larger than 1cm to effectively isolate improper sensing between the shell 100 and the touch surface.

In an embodiment, the electric isolator 120 includes a magnetic material or a non-magnetic material. When the electric isolator 120 and the touch surface both have magnetism, the erasing surface of the wiping device 10 can be more parallel with the touch surface by using magnetic force to avoid erroneous sensing on the touch surface due to uneven force that is applied when the user performs erasing action.

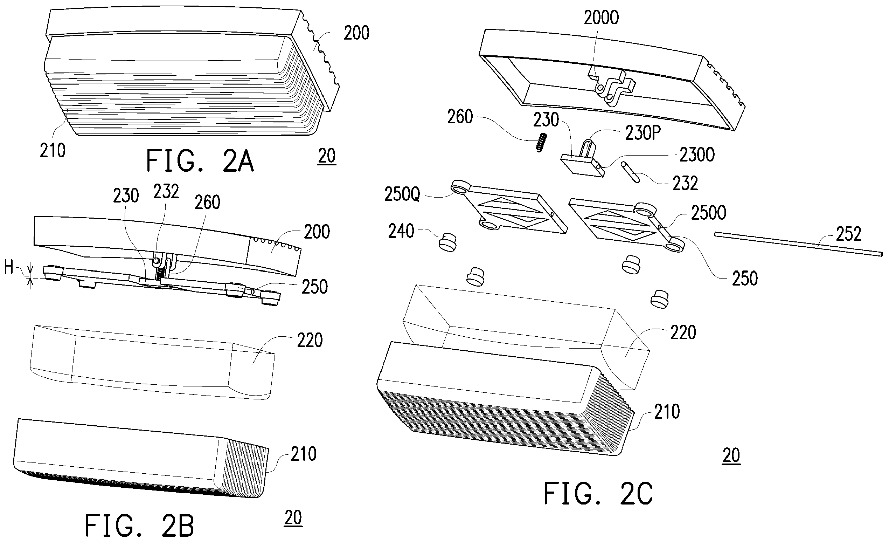

FIG. 2A is a three-dimensional schematic view illustrating a wiping device according to an embodiment of the disclosure. FIG. 2B is a three-dimensional explosive view illustrating a portion of the wiping device in FIG. 2A. FIG. 2C is a three-dimensional explosive view illustrating the wiping device in FIG. 2A. It should be pointed out that the embodiments of FIG. 2A to FIG. 2C are described based on the reference numerals and partial content incorporated in the embodiments of FIG. 1A to FIG. 1C. Specifically, the same or similar reference numerals are used to represent the same or similar elements, and the same technical content is omitted. The previous embodiments may serve as reference for the omitted descriptions, and no repetition is incorporated herein.

Referring to FIG. 2A, FIG. 2B and FIG. 2C, a wiping device 20 includes a shell 200, a plurality of induction elements 240 and an erasing body 210. The shell 200 includes a conductive material. The induction elements 240 are respectively electrically connected to the shell 200. The induction elements 240 are separated from each other. The erasing body 210 is disposed on the induction element 240. At least a portion of the erasing body 210 includes an insulating material. When the wiping device 20 is in contact with the touch surface, at least two of the induction elements 240 enable the touch surface to generate an erasing function command. The wiping device 20 is, for example, configured for a touch surface 1 as shown in FIG. 5; detailed descriptions are incorporated below.

In the embodiment, the wiping device 20 may selectively include an electric isolator 220. The electric isolator 220 is disposed between the shell 200 and the erasing body 210. In the embodiment, a portion of the electric isolator 220 is disposed between the induction element 240 and the erasing body 210, which should not be construed as a limitation to the disclosure. In some embodiments, the induction element 240 is disposed between the electric isolator 220 and the erasing body 210, and the electric isolator 220 provides an elastic force to the induction element 240 to allow the induction element 240 to be closely attached to the erasing body 210.

In the embodiment, the erasing body 210 covers the induction element 240, and the induction element 240 is directly in contact with the erasing body 210. The erasing body 210 can make the induction element 240 not to be directly in contact with the touch surface, and the thickness of the erasing body 210 ranges, for example, from 0.001mm to 50mm.

In the embodiment, the wiping device 20 selectively includes a connecting element 230 and a conductive supporter 250. In some embodiments, the electric isolator 220 is filled in a gap between the conductive supporter 250 and the shell 200. The electric isolator 220, for example, does not completely cover the induction element 240 so that the induction element 240 can be directly in contact with the erasing body 210. An inserting element 252 passes through an opening 2500 of the conductive supporter 250 and an opening 2300 of the connecting element 230 to pivotably combine the connecting element 230 and the conductive supporter 250. The inserting element 232 passes through an opening 230P of the connecting element 230 and an opening 2000 of the shell 200 to pivotably combine the connecting element 230 and the shell 200.

The connecting element 230 and the conductive supporter 250 electrically connect the induction elements 240 to the shell 200. The conductive supporter 250 is configured to fix the induction elements 240 on the erasing body 210. The connecting element 230 is electrically connected to the conductive supporter 250 and the shell 200. In the embodiment, the number of the induction elements 240 is four. The conductive supporter 250 includes four openings 250Q that are separately arranged. Each of the induction elements 240 corresponds to one opening 250Q of the conductive supporter 250. A portion of each induction element 240 is filled into the corresponding opening 250Q of the conductive supporter 250, and a portion of each induction element 240 is protruded from the conductive supporter 250 toward the direction of the erasing body 210 at a predetermined distance H. In some embodiments, only the induction elements 240 are directly in contact with the erasing body 210, thereby preventing the conductive supporter 250 from being sensed by the touch surface.

In the embodiment, the wiping device 20 selectively includes an elastic element 260 disposed on the connecting element 230. The elastic element 260 provides an elastic force to the induction elements 240 to enable the induction elements 240 to be closely attached to the erasing body 210. In the embodiment, the size of the opening 230P of the connecting element 230 is larger than the size of the inserting element 232, and both of the elastic element 260 and the inserting element 232 are disposed within the opening 230P of the connecting element 230. One end of the elastic element 260 leans against the inserting element 232, and another end thereof leans against the connecting element 230. When the elastic element 260 is pressed or released, the inserting element 232 can reciprocate in the opening 230P. In the embodiment, the elastic element 260 is a spring, which should not be construed as a limitation to the disclosure. Other element with elasticity and similar to spring may be used as the elastic element 260 in the disclosure. When the user operates the wiping device 20, even if the wiping device 20 is held to be in a manner of not being attached to the touch surface, by using the elastic element 260, the connecting element 230 and the conductive supporter 250 that can be pivoted relatively and the connecting element 230 and the shell 200 that can be pivoted relatively, the erasing surface of the wiping device 20 can be parallel with the touch surface.

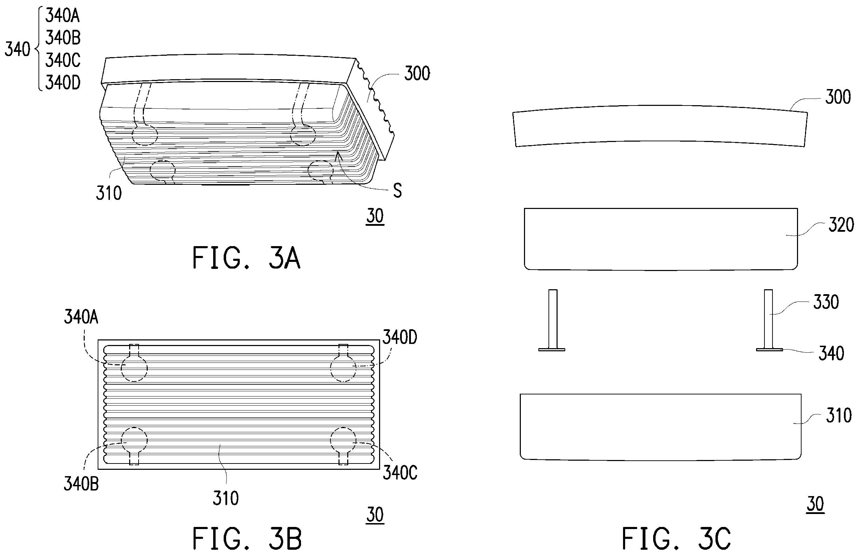

FIG. 3A is a three-dimensional schematic view illustrating a wiping device according to an embodiment of the disclosure. FIG. 3B is a top view illustrating the wiping device in FIG. 3A. FIG. 3C is a side explosive view illustrating the wiping device in FIG. 3A. It should be pointed out that the embodiments of FIG. 3A to FIG. 3C are described based on the reference numerals and partial content incorporated in the embodiments of FIG. 1A to FIG. 1C. Specifically, the same or similar reference numerals are used to represent the same or similar elements, and the same technical content is omitted. The previous embodiments may serve as reference for the omitted descriptions, and no repetition is incorporated herein.

Referring to FIG. 3A, FIG. 3B and FIG. 3C, a wiping device 30 includes a shell 300, a plurality of induction elements 340 and an erasing body 310. The shell 300 includes a conductive material. The induction elements 340 are respectively electrically connected to the shell 300. The induction elements 340 are separated from each other. The erasing body 310 is disposed on the induction elements 340. At least a portion of the erasing body 310 includes an insulating material. When the wiping device 30 is in contact with the touch surface, at least two of the induction elements 340 enable the touch surface to generate the erasing function command.

In the embodiment, the wiping device 30 may selectively include an electric isolator 320. The electric isolator 320 is disposed between the shell 300 and the erasing body 310. The electric isolator 320 provides an elastic force to the induction element 340 to enable the induction element 340 to be closely attached to the erasing body 310. In the embodiment, the induction element 340 is disposed between the electric isolator 320 and the erasing body 310, which should not be construed as a limitation to the disclosure. In other embodiments, the erasing body 310 is disposed between the induction element 340 and the electric isolator 320.

The wiping device 30 includes a connecting element 330. The induction element 340 is electrically connected to the shell 300 via the connecting element 330. In FIG. 3A and FIG. 3B, the number of the connecting elements 330 is the same as the number of the induction element 340; that is, each of the induction elements 340 is electrically connected to the shell 300 via the corresponding connecting element 330, which should not be construed as a limitation to the disclosure. A middle portion between both ends of each connecting element 330 is disposed on an outer side of the electric isolator 320. The connecting element 330 is connected to the shell 300 along the outer side of the electric isolator 320 from the induction element 340. In some embodiments, the connecting element 330 and the corresponding induction element 340 are formed integrally.

In the embodiments, the induction elements 340 include an induction element 340A, an induction element 340B, an induction element 340C and an induction element 340D. In some embodiments, a first vertical distance is defined between the induction element 340D and the erasing body 310. The first vertical distance, for example, refers to a vertical distance between the induction element 340D and an erasing surface S. A second vertical distance is disposed between the other induction elements 340A/340B/340C and the erasing body 310. The second vertical distance, for example, refers to a vertical distance between the induction elements 340A/340B/340C and the erasing surface S. The first vertical distance is different from the second vertical distance. Since the induction element 340D can cause a touch signal (e.g., a touch signal with different strength) that is different that of the other induction elements 340A/340B/340C on the touch surface, the relative position of the induction element 340D with different conductive coefficient can be determined based on the change of the capacitive value of the touch surface, and then the erasing shift amount, erasing shift angle, erasing rotating angle and/or erasing pressing stress can be calculated using the trigonometric function and calculus function. In some embodiments, the induction element 340D may have a different geometric shape and/or different conductive coefficient relative to the other induction elements 340A/340B/340C.

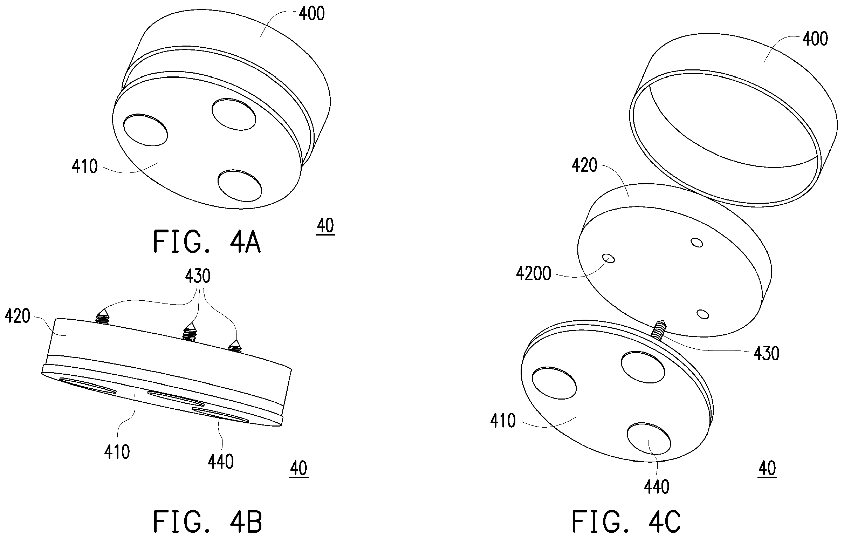

FIG. 4A is a three-dimensional schematic view illustrating a wiping device according to an embodiment of the disclosure. FIG. 4B is a three-dimensional explosive view illustrating a portion of the wiping device in FIG. 4A. FIG. 4C is a three-dimensional explosive view illustrating the wiping device in FIG. 4A. It should be pointed out that the embodiments of FIG. 4A to FIG. 4C are described based on the reference numerals and partial content incorporated in the embodiments of FIG. 1A to FIG. 1C. Specifically, the same or similar reference numerals are used to represent the same or similar elements, and the same technical content is omitted. The previous embodiments may serve as reference for the omitted descriptions, and no repetition is incorporated herein.

Referring to FIG. 4A, FIG. 4B and FIG. 4C, a wiping device 40 includes a shell 400, a plurality of induction elements 440 and an erasing body 410. The shell 400 includes a conductive material. The induction elements 440 are respectively electrically connected to the shell 400. The induction elements 440 are separated from each other. The erasing body 410 is disposed on the induction elements 440. At least a portion of the erasing body 410 includes an insulating material. When the wiping device 40 is in contact with the touch surface, at least two of the induction elements 440 enable the touch surface to generate an erasing function command.

In the embodiment, the wiping device 40 may selectively include an electric isolator 420 and a plurality of connecting elements 430. In the embodiment, each of the connecting elements 430, for example, includes a conductive connecting screw or other similar element. In FIG. 4B, the number of the connecting elements 430 is the same as the number of the induction elements 440; that is, each of the induction elements 440 is electrically connected to the shell 400 via corresponding connecting element 430, which should not be construed as a limitation to the disclosure. The electric isolator 420 is disposed between the shell 400 and the erasing body 410. Each connecting element 430 electrically connects the corresponding induction element 440 to the shell 100. The electric isolator 420 may have a plurality of openings 4200, and the connecting element 430 passes through the openings 4200 to be electrically connected to the shell 100. In some embodiments, the wiping device 40 further includes a plurality of elastic elements. The elastic elements are respectively sleeved on the connecting elements 430, providing elastic force to the induction elements 440 to allow the induction elements 440 to be closely attached to the erasing body 410.

FIG. 5 is a schematic view illustrating a touch system according to an embodiment of the disclosure. It should be pointed out that the embodiment of FIG. 5 is described based on the reference numerals and partial content incorporated in the embodiment of FIG. 1A. Specifically, the same or similar reference numerals are used to represent the same or similar elements, and the same technical content is omitted. The previous embodiments may serve as reference for the omitted descriptions, and no repetition is incorporated herein.

Referring to FIG. 5, the touch system includes a touch surface 1, a wiping device 6, a writing device 4 and a touching object 5.

In the embodiment, the wiping device 6 is exemplified as the wiping device 10 in the embodiment of FIG. 1A, which should not be construed as a limitation to the disclosure. The wiping device 6 may be a wiping device described in any one of the above-mentioned embodiments.

The writing device 4 has a writing substance which is, for example, an ink or other similar material. The writing device 4 may be, for example, a marker or other pen with ink.

The touching object 5 is, for example, a stylus, which should not be construed as a limitation to the disclosure. In some embodiments, the touching object 5 may be a finger, a toe or other body part.

The touch surface 1 has a capacitive touch function. In some embodiments, the touch surface 1 is electrically connected to an electronic device 2. The electronic device 2 is, for example, a cell phone, a computer, a hard disk or other electronic device. In some embodiments, the electronic device 2 may be electrically connected a docking device 3. The docking device 3, for example, includes a keyboard, a mouse, a handwriting board, a drawing board, a touch board, a button and so on that is used to operate the electronic device 2. In some embodiments, the touch system further includes a projector or other device that has projecting function. The projector can project an image on the touch surface 1. In some embodiments, for example, a reflective-projection technology or a rear-projection technology may be used on the touch surface 1. In some embodiments, the touch surface 1 is, for example, a touch surface of a transparent display panel having a touch function or other touch surface of a display having a touch function. Therefore, an electronic image can be formed on the touch surface 1 without adding a projector.

The touch surface 1 may have touch input and writing functions. When the writing device 4 is moved on the touch surface 1, a writing substance can be left on the touch surface 1 so that a handwriting 4a, such as ink handwriting, of the writing device is left on the touch surface 1. When the touching object 5 is moved on the touch surface 1, the touch surface 1 senses the moving track of the touching object 5, and a writing track information 5a corresponding to a moving track of the touching object 5 is formed in the electronic device 2.

In some embodiments, the touching object 5 may be combined with the writing device 4; for example, the touching object 5 is a sleeve element that is sleeved on the writing device 4. The touching object 5 may be a stylus having ink or a pen having conductive ink. Therefore, when the user forms the handwriting 4a (ink handwriting) of the writing device on the touch surface 1, the writing track information 5a corresponding to the handwriting 4a of the writing device can be formed simultaneously in the electrical device 2.

In the embodiment, a method for erasing the handwriting of the touch system includes erasing the handwriting 4a of the writing device on the touch surface 1 using the erasing body of the wiping device 6, identifying at least two of the induction elements of the wiping device 6 using the touch system and generating an erasing function command, outputting the erasing function command to the electronic device 2 that is electrically connected to the touch surface 1, deleting the writing track information 5a corresponding to the handwriting 4a of the writing device in the electronic device 2 simultaneously according to the erasing function command.

In summary, according to one of the embodiments of the disclosure, when the handwriting of writing device on the touch surface is erased, the writing track information corresponding to the handwriting of writing device in the electronic device can be deleted simultaneously. According to one of the embodiments of the disclosure, the position, number, geometric shape and/or conductive coefficient of the induction elements can be adjusted so that the capacitive value of the touch surface is changed correspondingly. Thereafter, the erasing shift amount, the erasing shift angle, the erasing rotating angle and/or the erasing pressing stress are calculated using trigonometric function and calculus function. According to one of the embodiments of the disclosure, the electric isolator is used to maintain the capacitive sensing angle of the touch surface and the touch device. According to one of the embodiments of the disclosure, at least one of the electric isolator, induction element, shell and erasing body in the wiping device includes a magnetic material, and the erasing surface of the wiping device can be more parallel with the touch surface using permanent magnetism principle to avoid erroneous sensing on the touch surface due to uneven force that is applied when the user performs erasing action.

It will be apparent to those skilled in the art that various modifications and variations can be made to the structure of the disclosure without departing from the scope or spirit of the disclosure. In view of the foregoing, it is intended that the disclosure cover modifications and variations of this disclosure provided they fall within the scope of the following claims and their equivalents. Moreover, the abstract and the name of the disclosure are only used to assist patent searching. Moreover, "first", "second", etc. mentioned in the specification and the claims are merely used to name the elements and should not be regarded as limiting the upper or lower bound of the number of the components/devices.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A wiping device configured for a touch surface having a capacitive touch function, the wiping device comprising:
a shell comprising a conductive material;
a plurality of induction elements respectively electrically connected to the shell and respectively separated from each other, and
an erasing body being disposed on the plurality of induction elements, and at least a portion of the erasing body comprises an insulating material,
wherein when the wiping device is in contact with the touch surface, at least two of the plurality of induction elements are configured to enable the touch surface to generate an erasing function command.

2. The wiping device according to claim 1, wherein at least one of the plurality of induction elements has a different shape relative to the other induction elements.

3. The wiping device according to claim 1 or 2, wherein at least one of the plurality of induction elements has a different conductive coefficient relative to the other plurality of induction elements.

4. The wiping device according to claim 1, 2 or 3, wherein a first vertical distance is defined between at least one of the plurality of induction elements and the erasing body, and a second vertical distance is defined between the other plurality of induction elements and the erasing body, wherein the first vertical distance is different from the second vertical distance.

5. The wiping device according to any one of the preceding claims, further comprising an electric isolator disposed between the shell and the erasing body.

6. The wiping device according to claim 5, wherein the plurality of induction elements are disposed between the electric isolator and the erasing body, the electric isolator provides an elastic force to the plurality of induction elements to enable the plurality of induction elements to be closely attached to the erasing body.

7. The wiping device according to any one of the preceding claims, wherein at least one of the electric isolator, the plurality of induction elements, the shell and the erasing body comprises a magnetic material.

8. The wiping device according to any one of the preceding claims, further comprising a plurality of connecting elements respectively electrically connecting the plurality of induction elements to the shell.

9. The wiping device according to any one of the preceding claims, further comprising a conductive supporter and a connecting element

10. The wiping device according to claim 9, wherein the conductive supporter is configured to fix the plurality of induction elements on the erasing body.

11. The wiping device according to claim 9 or 10, wherein the connecting element is electrically connected to the conductive supporter and the shell.

12. The wiping device according to any one of the claims 8, 9, 10 or 11, further comprising a plurality of elastic elements respectively disposed on the plurality of connecting elements.

13. A touch system comprising a touch surface and a wiping device as claimed in any one of the preceding claims, the touch surface having a capacitive touch function.

14. The touch system according to claim 13, further comprising:
an electronic device, configured to receive the erasing function command from the touch surface,
wherein when the wiping device is in contact with the touch surface, the erasing body is configured to erase a handwriting of a writing device on the touch surface and the electronic device is configured to simultaneously delete a writing track information corresponding to the handwriting of the writing device according to the erasing function command.

15. A method for erasing a handwriting of a touch system, comprising the steps of:
providing the touch system described in claim 13 or 14;
erasing a handwriting of a writing device on the touch surface using the erasing body of the wiping device;
identifying at least two of the plurality of induction elements of the wiping device using the touch system and generating an erasing function command;
outputting the erasing function command to an electronic device electrically connected to the touch surface; and
deleting a writing track information corresponding to the handwriting of the writing device in the electronic device simultaneously according to the erasing function command.
